# EUROPÄISCHE PATENTANMELDUNG

(11) **EP 1 684 159 A2**
(43) Veröffentlichungstag der Anmeldung: **26.07.2006**
(21) Anmeldenummer: 05028774.7
(22) Anmeldetag: 31.12.2005
(51) Int. Cl.: G06F 3/033

(54) **Mobile haptische Schnittstelle**

(30) Priorität: 25.01.2005 DE 102005003513
(71) Anmelder: Universität Karlsruhe (TH), 76128 Kalrsruhe (DE)
(72) Erfinder: Hanebeck, Uwe, 76337 Waldbronn (DE); Rössler, Patrick, 76137 Karlsruhe (DE)
(74) Vertreter: Blumenröhr, Dietrich

(57) **Zusammenfassung**

Die Erfindung betrifft eine mobile haptische Schnittstelle, insbesondere für weiträumige Telepräsenz. Die Schnittstelle weist zumindest einen Manipulator auf mit einem Endeffektor zur Übergabe der haptischen Informationen zwischen Benutzer und Manipulator. Am anderen Ende des Manipulators ist ein Bezugspunkt ortsfest in der Benutzerumgebung angeordnet. Der Manipulator besteht aus einer mehrachsigen Handhabungsvorrichtung, die geeignet ist, die weiträumige Entfernung zwischen dem Benutzer und dem ortsfesten Punkt zu überbrücken.

## Beschreibung

Die Erfindung betrifft eine mobile haptische Schnittstelle, insbesondere für weiträumige Telepräsenz, wobei die Schnittstelle dazu dient, haptische Informationen zwischen einem an einer beliebigen Position in einer definierten weiträumigen Benutzerumgebung befindlichen Benutzer und einem Bezugspunkt dieser Benutzerumgebung zu übertragen, und wobei die Schnittstelle zumindest einen Manipulator aufweist, an dessen einem, dem Benutzer zugeordneten Ende zumindest ein Endeffektor zur Übergabe der haptischen Informationen zwischen Benutzer und Manipulator angeordnet ist und dessen anderes Ende zumindest indirekt mit dem Bezugspunkt mechanisch verbunden ist.

Haptische Schnittstellen gibt es bereits in verschiedenen Formen und für verschiedene Anwendungen: So beschreibt beispielsweise die EP-A 0 721 615 eine taktile Schnittstelle, die zum einen einen Endeffektor in Form eines Fingerhuts für die physische Verbindung mit einem Körperteil des Benutzers und zum anderen einen Manipulator zum physischen Koppeln des Verbindungselements mit einem Bezugspunkt (bzw. Standard) aufweist. Durch diese Schnittstelle ist es möglich, haptische Informationen zwischen einem Benutzer und einem Rechner, einer Maschine etc. zu übertragen, um so das Arbeiten mit der angesteuerten Maschine, insbesondere einem Roboter, einem Arbeitswerkzeug etc. dadurch zu verbessern, dass der Benutzer eine Kraftrückkopplung erfährt, wenn er über die haptische Schnittstelle den Roboter bzw. das Arbeitsgerät betätigt. Damit kann er in einer virtuellen oder realen entfernten Zielumgebung Arbeiten in fast gleicher Weise wahrnehmen (und durchführen) wie in seiner Benutzerumgebung. Steuert beispielsweise ein Operateur mit Hilfe einer solchen haptischen Schnittstelle ein in einer entfernten Zielumgebung vorhandenes chirurgisches Arbeitsgerät, so kann er hierdurch nicht nur die Bewegung des Arbeitsgerätes unmittelbar steuern, sondern er erhält auch noch eine kräftemäßige Rückkopplung, wenn das Arbeitsgerät andere Materialien und insbesondere einen Patienten beaufschlagt. Dies erleichtert ihm das Arbeiten in wesentlichem Maße.

Neben solchen stationären haptischen Schnittstellen wächst aber auch immer mehr der Bedarf nach mobilen haptischen Schnittstellen, wie sie beispielsweise in der DE-Z Automatisierungstechnik" (Nr. 1, 2003, Seite 5 bis 12) offenbart sind: Dort ist die aus der zuvor genannten EP-A 0 721 615 bekannte stationäre haptische Schnittstelle mit einer Plattform als Bezugspunkt gekoppelt, die sich in einer definierten weiträumigen Benutzerumgebung bewegen lässt und es so ermöglicht, die stationäre Schnittstelle immer dort zu positionieren, wo sich der Benutzer gerade aufhält und eine haptische Rückkopplung erfahren möchte. Damit lassen sich Arbeiten in einer realen entfernten oder in einer virtuellen Zielumgebung durchführen, die mindestens ebenso weiträumig ist wie die Benutzerumgebung, was die Einsatzmöglichkeiten für solche Geräte mit haptischer Schnittstelle erheblich vergrößert.

Dabei muss die mobile haptische Schnittstelle in der Lage sein, Kräfte und Momente an den Händen des Benutzers wirklichkeitsnah darzustellen, während die Plattform, auf der sich die mobile haptische Schnittstelle befindet, den weiträumigen Bewegungen des Benutzers aktiv nachfolgen und dabei schnell und wendig sein muss. Einen realistischen haptischen Eindruck erhält der Benutzer nur dann, wenn die mobile Plattform immer so positioniert ist, dass der Manipulator optimal zum Benutzer orientiert ist und so die Kräfte und Momente wie bei den bekannten stationären haptischen Schnittstellen übertragen werden können. Ändert der Benutzer seine Orientierung oder seine Position relativ zur Benutzerumgebung, so muss auch die mobile Plattform entsprechend schnell ihre Position daran anpassen, was jedoch eine sehr aufwendige Regelung erfordert. Schließlich besteht ein weiterer Nachteil dieser bekannten haptischen Schnittstelle darin, dass der Manipulator gegenüber der mobilen Plattform so weit vorkragen kann, dass die Funktionalität der mobilen Plattform beeinträchtigt wird oder die Plattform sogar kippen kann.

Hiervon ausgehend liegt der vorliegenden Erfindung die Aufgabe zugrunde, eine mobile haptische Schnittstelle der eingangs genannten Art zur Verfügung zu stellen, die einfach handhabbar ist und die ihre weiträumige Beweglichkeit mit einfacheren Mitteln als bei der bekannten mobilen haptischen Schnittstelle erreicht, damit bestehende Telepräsenzsysteme, bei denen bereits eine wirklichkeitsnahe freie telepräsente Fortbewegung in einer weiträumigen realistischen entfernten oder virtuellen Zielumgebung möglich ist, mit möglichst geringem Aufwand um eine ebenso weiträumige haptische Interaktion erweitert werden können.

Diese Aufgabe wird erfindungsgemäß dadurch gelöst, dass der Bezugspunkt ortsfest in der Benutzerumgebung angeordnet ist, und dass der Manipulator aus einer mehrachsigen Handhabungsvorrichtung besteht, die geeignet ist, die weiträumige Entfernung zwischen dem an einer beliebigen Position in der Benutzerumgebung befindlichen Benutzer und dem ortsfestem Bezugspunkt zu überbrücken. Hierdurch ergibt sich der wesentliche Vorteil, dass lediglich der Manipulator der Bewegung des Benutzers folgen muss, während der Bezugspunkt ortsfest an einer vorgegebenen stationären Position der Benutzerumgebung verbleiben kann - im Gegensatz zu der mobilen Plattform des Standes der Technik, wo der Bezugspunkt des Manipulators der mobilen Plattform zugeordnet ist und dann jeweils die Position dieses Bezugspunktes gegenüber der Benutzerumgebung errechnet werden muss. Durch den ortsfesten Bezugspunkt ist somit keine Funktionentrennung mehr nötig zwischen einerseits der Bewegung des Benutzers relativ zur Plattform, also bezüglich eines plattformfesten Koordinatensystems, und andererseits der Bewegung der Plattform relativ zur Benutzerumgebung, also bezüglich eines raumfesten Koordinatensystems.

Da der mehrachsige Manipulator direkt vom Benutzer über den Endeffektor geführt und bewegt wird, ist auch kein aktives Nachregeln der Plattformposition gegenüber dem Benutzer erforderlich, um die Plattform optimal so relativ zum Benutzer zu positionieren, dass dessen haptische Wahrnehmung nicht beeinträchtigt wird sowie dessen weitere Bewegungen in der Benutzerumgebung nicht behindert werden. So ist beispielsweise mit Hilfe der mehrachsigen Handhabungsvorrichtung eine Bewegung des Benutzers in einer 5 m x 5 m x 2,5 m (L x B x H) großen Benutzerumgebung möglich, womit die haptische Schnittstelle zumindest den gängigsten Anforderungen an die Weiträumigkeit von Telepräsenzsysteme entspricht. Vor allem wenn man das Telepräsenzsystem mit bekannten Verfahren zur Bewegungskomprimierung ("motion compression") kombiniert, können damit beliebig große Zielumgebungen bearbeitet und damit alle denkbaren Bedarfsfälle abgedeckt werden.

Zweckmäßigerweise ist die mehrachsige Handhabungsvorrichtung in einer im Wesentlichen oberhalb des Benutzers angeordneten Portalbauweise erstellt, so dass sie den Benutzer so wenig wie möglich stört und ihn vor allem nicht bei der weiträumigen Bewegung behindert. Eine mögliche Bauform einer mehrachsigen Handhabungsvorrichtung weist zumindest drei translatorische Freiheitsgrade und zumindest einen rotatorischen Freiheitsgrad auf und umfasst hierbei zum Beispiel eine zumindest einen wesentlichen Teil der Breite der Benutzerumgebung überbrückende und in Richtung der Tiefe der Benutzerumgebung bewegbare Portaltraverse, einen an der Portaltraverse angeordneten und relativ zu dieser in Richtung der Breite der Benutzerumgebung bewegbaren Schlitten, ein am Schlitten zumindest mittelbar angeordnetes und in Richtung der Höhe der Benutzerumgebung bewegbares Hubstellglied und ein am Hubstellglied angeordnetes Schwenkglied, das um die vertikale Bewegungsachse des Hubstellglieds in horizontaler Richtung drehbar ist. Hierdurch erhält man eine leichtläufige und die Bewegungsfreiheit des Benutzers nur minimal einschränkende Kopplung des dem Benutzer zugeordneten Endeffektors mit dem ortsfesten Bezugspunkt.

Ähnlich einfach und leichtgängig ist diese Kopplung dann, wenn die mehrachsige Handhabungsvorrichtung zumindest zwei rotatorische Freiheitsgrade und zumindest einen weiteren rotatorischen oder translatorischen Freiheitsgrad aufweist und so beispielsweise ein um eine vertikale Achse in horizontaler Richtung drehbares Karussell umfasst, einen am Karussell angelenkten Auslegerarm und ein am freien Ende des Auslegerarms angeordnetes Schwenkglied, das ebenfalls um eine vertikale Achse in horizontaler Richtung drehbar ist, wobei einerseits der Auslegerarm um eine horizontale Achse schwenkbar am Karussell angeordnet sein kann oder andererseits der Auslegerarm am Karussell oder das Schwenkglied am freien Ende des Auslegerarms in Richtung der Höhe der Benutzerumgebung bewegbar sein kann.

Beide Varianten besitzen den Vorteil, dass sie mit einfachen Mitteln den gesamten Bereich der weiträumigen Benutzerumgebung abdecken können und dass die Bewegungsführung dieser Einzelelemente der mehrachsigen Handhabungsvorrichtung problemlos über den Benutzer erfolgen kann.

Vorteilhafterweise umfasst das Schwenkglied ein Ringlaufelement, das für eine leichtgängige Bewegung des Schwenkglieds um die vertikale Z-Achse sorgt. An diesem Ringlaufelement - oder an einer sonstigen Variante des Schwenkglieds - ist der Endeffektor angeordnet, der beispielsweise aus einem Handgriff, einer Hand- oder Armschlinge, einem Handschuh oder dergleichen bestehen kann.

Um die gewünschte haptische Information zu übertragen und/oder zu generieren ist zwischen Endeffektor und Manipulator ein Kraft-/Momentensensor angeordnet, wie er auch bei stationären haptischen Schnittstellen verwendet wird. Es sei an dieser Stelle erwähnt, dass es natürlich grundsätzlich ebenso möglich ist, die Übertragung und/oder Generierung der haptischen Information in einem beliebigen Bereich des Manipulators - oder theoretisch sogar zwischen Manipulator und ortsfestem Bezugspunkt - vorzusehen, wobei jedoch die Trägheit des zwischen Benutzer und Kraft-/Momentensensor befindlichen Bereichs des Manipulators für eine Verschlechterung des haptischen Eindrucks sorgt.

Die Funktionalität der mobilen haptischen Schnittstelle lässt sich dadurch noch erweitern, wenn zusätzlich zum Endeffektor ein taktiles Display vorgesehen ist, also beispielsweise ein so genannter Cyber-Handschuh, so dass der Endeffektor über einen Handgriff oder eine Handschlinge für die erforderliche Darstellung externer Kräfte sorgt, während das taktile Display für zusätzliche Informationen sorgen kann.

Weitere Merkmale und Vorteile der vorliegenden Erfindung ergeben sich aus der nachfolgenden Beschreibung eines Ausführungsbeispiels anhand der Zeichnungen; hierbei zeigen
- Figur 1: die weiträumige Benutzerumgebung mit einer erfindungsgemäßen mobilen haptischen Schnittstelle in perspektivischer Draufsicht und
- Figur 2: einen Teil eines Manipulators mit Endeffektor als Teil der erfindungsgemäßen haptischen Schnittstelle.

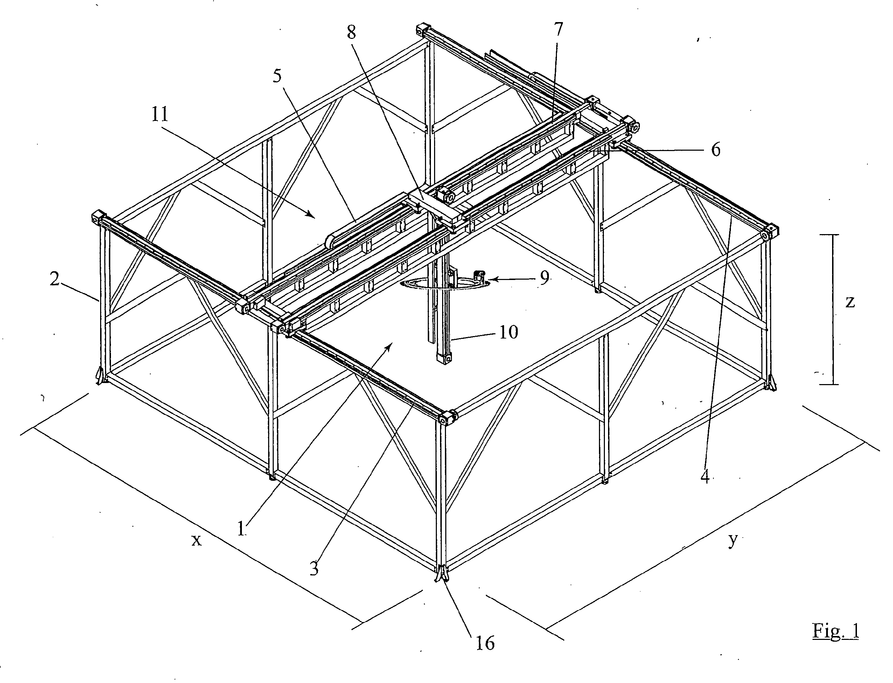

In Figur 1 ist eine weiträumige Benutzerumgebung 1 dargestellt, die von einem gitterähnlichen Gestell 2 begrenzt wird, so dass die Benutzerumgebung eine horizontale Tiefe x von beispielsweise 5 m, eine horizontale Breite y von beispielsweise 5 m und eine vertikale Höhe z von beispielsweise 2,5 m aufweist. Das Gestell 2 trägt auf seiner Oberseite zwei sich in Richtung der Tiefe x der Benutzerumgebung 1 erstreckende horizontale Laufschienen 3, 4, auf denen eine Portaltraverse 5 in x-Richtung bewegbar angeordnet (und über Zahnriemen angetrieben) ist. Auf der Portaltraverse 5 sind ebenso zwei horizontale Laufschienen 6, 7 vorgesehen, die sich in y-Richtung erstrecken und auf denen ein Schlitten 8 horizontal verfahrbar angeordnet (und ebenfalls über Zahnriemen angetrieben) ist.

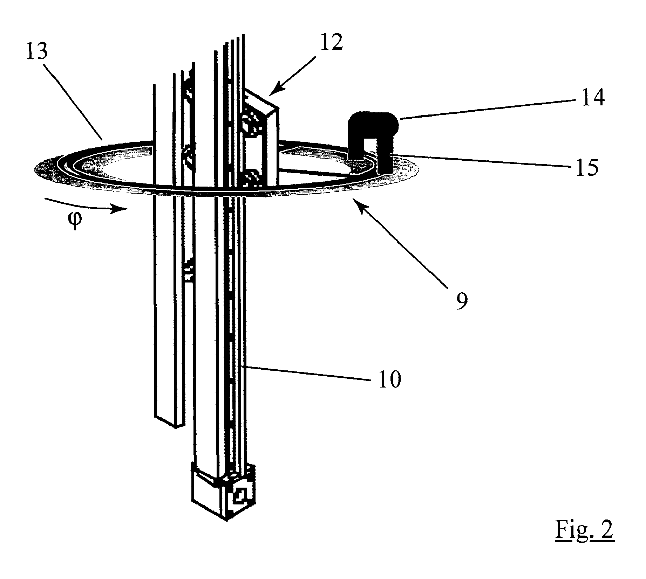

Von diesem Schlitten erstreckt sich in vertikaler Z-Richtung nach unten ein Hubstellglied 9, das in Figur 2 näher dargestellt ist. Das Hubstellglied 9 besteht einerseits aus einer vertikalen am Schlitten 8 festgelegten Führungsschiene 10 und andererseits aus einem entlang dieser Führungsschiene in (z- bzw.) Vertikalrichtung verfahrbaren Hubschlitten 12. An diesem Hubschlitten 12 ist ein die Führungsschiene 10 und den Schlitten 12 umgebendes Schwenkglied 13 in Form eines Ringlaufs vorgesehen mit einem um die vertikale Achse um einen Schwenkwinkel *φ* bewegbaren Handgriff 14. Schließlich ist zwischen Ringlauf 13 und Handgriff 14 ein Kraft-/Momentensensor 15 angeordnet, um die haptischen Informationen zu generieren bzw. zu übertragen.

Während im dargestellten Ausführungsbeispiel der Handgriff 14 in Horizontalrichtung orientiert ist, versteht sich von selbst, dass dieser sich natürlich auch in andere Richtungen erstrecken kann. Ebenso können Portaltraverse 5 und Schlitten 8 in andere Richtungen verlaufen.

Was die Führungsschienen betrifft, so sorgen jeweils zwei parallel geschaltete Schienen dafür, dass die jeweilige translatorische Bewegung frei von Kippmomenten bleibt. Zwar können alle Elemente der mehrachsigen Handhabungsvorrichtung, also insbesondere Portaltraverse, Schlitten und Ringlauf, allein vom Benutzer bewegt werden; um jedoch die haptischen Informationen zu verbessern und diese zumindest in der Wahrnehmung des Benutzers zu entkoppeln von den dafür notwendigen Bewegungen der mehrachsigen Handhabungsvorrichtung, ist es zweckmäßig, alle Bewegungen über Antriebe zu unterstützen.

Mit dem vorliegenden System ist es nun problemlos möglich, die Position und Orientierung des Endeffektors relativ zu der Benutzerumgebung und zu einem vorgegebenen ortsfesten Bezugspunkt zu ermitteln, welcher in Figur 1 beispielhaft mit der Position 16 angegeben ist. Hierbei sorgen der Ringlauf 13, der Hubschlitten 12, die Führungsschiene 10, der Schlitten 8, die Führungsschienen 6 und 7, die Portaltraverse 5, die Führungsschienen 3 und 4 sowie das Gestell 2, die zusammen den Manipulator 11 bilden, für die nötige mechanische Kopplung des Endeffektors 14 mit dem ortsfesten Bezugspunkt 16.

Die die jeweiligen Positionen dieser einzelnen Elemente ermittelnden Sensoren sind an einen Mikrocontroller angeschlossen, der die Sensordaten auswertet. Über einen Vergleich mit den von einem Steuerrechner vorgegebenen Sollwerten werden die Ansteuerwerte für die Getriebemotoren bestimmt. Auf dem Steuerrechner wiederum wird ein Programm ausgeführt, das die zu simulierenden Kräfte in Abhängigkeit der Position und der Lage des Endeffektors bestimmt. Diese Daten werden an die Reglerelektronik weitergeleitet.

Zusammenfassend ist es mit der vorliegenden Erfindung möglich, einem Benutzer eine mobile haptische Schnittstelle zur Verwendung in einer weiträumigen Benutzerumgebung zur Verfügung zu stellen, so dass er unter Ausnutzung dieser weiträumigen Benutzerumgebung beispielsweise Anwendungen in einer ähnlich weiträumigen virtuellen oder realen Zielumgebung durchführen kann und hierbei entweder virtuelle Welten erforschen - beispielsweise Wände und Gegenstände ertasten oder Objekte manipulieren - kann; ebenso kann er in einer unzugänglichen oder lebensfeindlichen realen Zielumgebung technische Geräte über einen ebenso weiträumigen Bereich manipulieren, wie es beispielsweise bei der Teleoperation von Haushaltsrobotern erforderlich ist. Kombiniert man diese haptische Schnittstelle mit Verfahren zur Bewegungskomprimierung, so lässt sich die Weiträumigkeit in der Zielumgebung sogar noch steigern.

## Patentansprüche

1. Mobile haptische Schnittstelle, insbesondere für weiträumige Telepräsenz, wobei die Schnittstelle dazu dient, haptische Informationen zwischen einem an einer beliebigen Position in einer definierten weiträumigen Benutzerumgebung befindlichen Benutzer und einem Bezugspunkt (16) dieser Benutzerumgebung (1) zu übertragen, und wobei die Schnittstelle zumindest einen Manipulator (11) aufweist, an dessen einem, dem Benutzer zugeordneten Ende zumindest ein Endeffektor (14) zur Übergabe der haptischen Informationen zwischen Benutzer und Manipulator angeordnet ist und dessen anderes Ende zumindest indirekt mit dem Bezugspunkt (16) mechanisch verbunden ist,
**dadurch gekennzeichnet,**
**dass** der Bezugspunkt (16) ortsfest in der Benutzerumgebung (1) angeordnet ist, dass der Manipulator (11) aus einer mehrachsigen Handhabungsvorrichtung besteht, die geeignet ist, die weiträumige Entfernung zwischen dem an einer beliebigen Position in der Benutzerumgebung befindlichen Benutzer und dem ortsfesten Bezugspunkt zu überbrücken.

2. Mobile haptische Schnittstelle nach Anspruch 1,
**dadurch gekennzeichnet,**
**dass** die mehrachsige Handhabungsvorrichtung in einer im Wesentlichen oberhalb des Benutzers angeordneten Portalbauweise erstellt ist.

3. Mobile haptische Schnittstelle nach zumindest Anspruch 1,
**dadurch gekennzeichnet,**
**dass** die mehrachsige Handhabungsvorrichtung zumindest drei translatorische Freiheitsgrade (x, y, z) und zumindest einen rotatorischen Freiheitsgrad (*φ*) aufweist.

4. Mobile haptische Schnittstelle nach Anspruch 3,
**dadurch gekennzeichnet,**
**dass** die mehrachsige Handhabungsvorrichtung zumindest aufweist:
- eine zumindest einen wesentlichen Teil der Breite (y) der Benutzerumgebung überbrückende und in Richtung der Tiefe (x) der Benutzerumgebung bewegbare Portaltraverse (5),
- einen an der Portaltraverse angeordneten und relativ zu dieser in Richtung der Breite (y) der Benutzerumgebung bewegbaren Schlitten (8),
- ein am Schlitten zumindest mittelbar angeordnetes und in Richtung der Höhe (z) der Benutzerumgebung bewegbares Hubstellglied (9) und
- ein am Hubstellglied (9) angeordnetes Schwenkglied (13), das um die vertikale Bewegungsachse (z) des Hubstellglieds in horizontaler Richtung (*φ*) drehbar ist.

5. Mobile haptische Schnittstelle nach zumindest Anspruch 1,
**dadurch gekennzeichnet,**
**dass** die mehrachsige Handhabungsvorrichtung zumindest zwei rotatorische Freiheitsgrade und zumindest einen weiteren rotatorischen oder translatorischen Freiheitsgrad aufweist.

6. Mobile haptische Schnittstelle nach Anspruch 5,
**dadurch gekennzeichnet,**
**dass** die mehrachsige Handhabungsvorrichtung zumindest aufweist:
- ein um eine vertikale Achse in horizontaler Richtung drehbares Karussell,
- einen am Karussell angelenkten Auslegerarm, und
- ein am freien Ende des Auslegerarms angeordnetes Schwenkglied, das ebenfalls um eine vertikale Achse in horizontaler Richtung drehbar ist.

7. Mobile haptische Schnittstelle nach zumindest Anspruch 6,
**dadurch gekennzeichnet,**
**dass** der Auslegerarm um eine horizontale Achse schwenkbar am Karussell angeordnet ist.

8. Mobile haptische Schnittstelle nach zumindest Anspruch 6,
**dadurch gekennzeichnet,**
**dass** der Auslegerarm am Karussell oder das Schwenkglied am freien Ende des Auslegerarms in Richtung der Höhe der Benutzerumgebung bewegbar ist.

9. Mobile haptische Schnittstelle nach zumindest Anspruch 4 oder 6,
**dadurch gekennzeichnet,**
**dass** das Schwenkglied (13) ein Ringlaufelement aufweist.

10. Mobile haptische Schnittstelle nach zumindest Anspruch 4, 6 oder 9,
**dadurch gekennzeichnet,**
**dass** am Schwenkglied (13) der Endeffektor (14) angeordnet ist.

11. Mobile haptische Schnittstelle nach zumindest Anspruch 1,
**dadurch gekennzeichnet,**
**dass** zwischen Endeffektor (14) und Manipulator (11) ein Kraft-/Momenten-Sensor (15) zur Übertragung und/oder Generierung der haptischen Informationen angeordnet ist.

12. Mobile haptische Schnittstelle nach zumindest Anspruch 1,
**dadurch gekennzeichnet,**
**dass** der Endeffektor (14) aus einem Handgriff, einer Hand- oder Armschlinge, einem Handschuh oder dergleichen besteht.

13. Mobile haptische Schnittstelle nach zumindest Anspruch 1,
**dadurch gekennzeichnet,**
**dass** die haptische Schnittstelle zusätzlich zum Endeffektor ein taktiles Display aufweist.
